# EUROPEAN PATENT SPECIFICATION

(11) **EP 4 300 875 B1**
(45) Date of publication and mention of the grant of the patent: **05.11.2025**
(21) Application number: 23181939.2
(22) Date of filing: 28.06.2023
(51) Int. Cl.: H04L 9/32

(54) **SYSTEM, INFORMATION PROCESSING APPARATUS, INFORMATION PROCESSING METHOD, AND COMPUTER PROGRAM**
SYSTEM, INFORMATIONSVERARBEITUNGSVORRICHTUNG, INFORMATIONSVERARBEITUNGSVERFAHREN UND COMPUTERPROGRAMM
SYSTÈME, APPAREIL DE TRAITEMENT D'INFORMATIONS, PROCÉDÉ DE TRAITEMENT D'INFORMATIONS ET PROGRAMME INFORMATIQUE

(30) Priority: 30.06.2022 JP 2022106440
(43) Date of publication of application: 03.01.2024
(73) Proprietor: CANON KABUSHIKI KAISHA, Tokyo 146-8501 (JP)
(72) Inventor: ISHIKAWA, Manabu, Tokyo (JP); FUKE, Kazuhisa, Tokyo (JP)
(74) Representative: WESER & Kollegen Patentanwälte PartmbB

(56) References cited:
- WO-A1-2018/211303
- US-A1- 2021 344 514

## Description

### BACKGROUND OF THE DISCLOSURE

### Field of the Disclosure

The present disclosure relates to a technique for managing errors in an apparatus.

### Description of the Related Art

In recent years, it has become common for apparatuses having a communication function to receive services by obtaining various kinds of information by connecting to the Internet or a cloud and communicating with a server or apparatus.

For example, stationary apparatuses provide services by connecting to the Internet or a cloud and connecting to another apparatus or a server. Office devices, such as a copy machine, connect to the Internet or a cloud and provide a printing service. IoT devices, such as sensors, are connected to the Internet and transmit information. When data is thus frequently exchanged between apparatuses or between an apparatus and a server, information to be transmitted by the apparatuses becomes increasingly important.

**It** is similar for moving bodies. Vehicles, which are typical moving bodies, are equipped with a communication function. Information is exchanged using V2X communication, such as vehicle-to-vehicle (V2V) communication in which communication with another vehicle is performed and vehicle-to-infrastructure (V2I) communication in which communication with a roadside device, such as a traffic light, is performed. Activities for supporting a driver's recognition, judgment and operation by obtaining various kinds of information, such as road information, by connecting to the Internet or a cloud are being promoted.

By popularization of autonomous driving and the like, it is possible to control traveling based on information according to a vehicle's own sensors, such as a traveling position and a moving velocity measured by sensors mounted on that vehicle, and information received externally by V2X communication. Here, when an error occurs in a vehicle, in order to prevent a traffic accident, it is important for that vehicle to transmit an error notification and for a receiving vehicle and the like to perform vehicle control based on the error notification.

In addition, in recent years, utilization of drones, which are small unmanned moving bodies, has increased. For example, it is assumed that if drones are to be used for delivering packages in the future, the drones will fly in the sky at approximately 150 m from the ground in autonomous driving mode. Meanwhile, when an error occurs in a drone, a situation in which autonomous flight becomes impossible or a situation in which the drone will collide with another drone is anticipated. Under such circumstances, pedestrians and the like on the ground may be harmed by a drone or a package falling to the ground. Therefore, it is also important for drones to notify other drones, vehicles and pedestrians on the ground, and the like of any error that has occurred.

When information is thus constantly exchanged between an apparatus and a server and between apparatuses, the reliability of a message transmitted by the apparatus becomes important. It becomes particularly important to determine whether information transmitted from an apparatus in which an error has occurred, an apparatus which is hit by cyberattack, or the like can be trusted.

In recent years, an apparatus is always connected to a network, and thus, device authentication based on certificates has become mainstream as a mechanism for authenticating whether a connection destination apparatus is legitimate. Although it is possible to determine whether the apparatus is legitimate by using device authentication, the reliability of a message transmitted by the apparatus is not guaranteed. In addition, in device authentication based on certificates, it is important that a certificate is issued and revoked at appropriate timings.

Japanese Patent No. 4915182 includes a disclosure related to a notification method in which an apparatus notifies its withdrawal from a group at the time of apparatus replacement and also discloses a method of transmitting a withdrawal notification to a certification authority when a certificate needs to be revoked and of making a notification to a connection destination about the withdrawal.

Japanese Patent Laid-Open No. 2009-289220 discloses a mechanism for notifying another vehicle of an error that has occurred in a vehicle, relayed by a server. In addition, ETSI TR 103 460 defines a mechanism for notifying improper behavior of another vehicle. US 2021/0344514 A1 relates to ensuring that V2X communication from an V2X Entity is trustworthy and not compromised by a malicious actor. WO 2018/211303 A1 discloses a method for detecting whether an Intelligent Transport System station is misbehaving based on a second information source such as a location service of a cellular network.

The methods disclosed in Japanese Patent No. 4915182 do not anticipate cases where an error occurs in an apparatus. In addition, the withdrawal is notified by the apparatus side, and upon receiving the notification, the certificate authority always revokes the certificate, and so, there is a possibility that certificates that do not need to be revoked will be revoked.

In the method of Japanese Patent Laid-Open No. 2009-289220, an error notification transmitted by an apparatus is transferred via a server, and so there is the circumstance that the error notification cannot be suppressed due to always being transmitted via the server. In addition, in ETSI TR 103 460, there is no mechanism for a vehicle to notify an error that occurred in that vehicle.

### SUMMARY OF THE DISCLOSURE

The present disclosure provides a technique for revoking a certificate of an apparatus in which an error has occurred, at an appropriate timing.

The present invention in its first aspect provides a system as specified in claims 1 to 6.

The present invention in its second aspect provides an information processing method as specified in claim 7.

The present invention in its third aspect provides a computer program as specified in claim 8.

Further features of the present disclosure will become apparent from the following description of exemplary embodiments with reference to the attached drawings.

### BRIEF DESCRIPTION OF THE DRAWINGS

FIG. 1 is a block diagram illustrating an example of a configuration of a system.
FIG. 2 is a block diagram illustrating an example of functional configurations of a server, an apparatus A, an apparatus B, and the like.
FIG. 3A is a diagram illustrating an example of a format of a message.
FIG. 3B is a diagram illustrating an example of a configuration of an error notification message.
FIG. 3C is a diagram illustrating an example of IDs corresponding to various types of errors.
FIG. 3D is a diagram illustrating an example of IDs corresponding to codes indicating various kinds of error content.
FIG. 3E is a diagram illustrating an example of IDs corresponding to various levels of error.
FIG. 4 is a flowchart for explaining an operation of the system.
FIG. 5 is a flowchart for explaining an operation of the system.
FIG. 6 is a block diagram illustrating an example of a functional configuration of the system.
FIG. 7 is a flowchart of an operation of the system.
FIG. 8 is a diagram illustrating an example of application of the system.
FIG. 9 is a block diagram illustrating an example of a functional configuration of the system.
FIG. 10 is a flowchart of an operation of the system.
FIG. 11 is a diagram illustrating an example of a configuration of an error notification message to be transmitted to an apparatus other than the server.
FIG. 12 is a block diagram illustrating an example of a hardware configuration of a computer apparatus.

### DESCRIPTION OF THE EMBODIMENTS

Hereinafter, embodiments will be described in detail with reference to the attached drawings. Note, the following embodiments are not intended to limit the scope of the claimed disclosure. Multiple features are described in the embodiments, but limitation is not made to a disclosure that requires all such features, and multiple such features may be combined as appropriate. Furthermore, in the attached drawings, the same reference numerals are given to the same or similar configurations, and redundant description thereof is omitted.

### [First Embodiment]

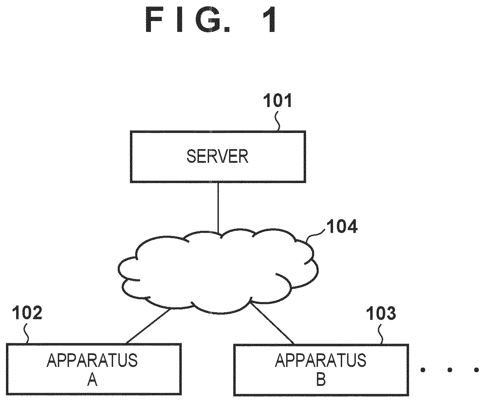

First, an example of a configuration of a system according to the present embodiment will be described with reference to a block diagram of FIG. 1. As illustrated in FIG. 1, the system according to the present embodiment includes a server 101 functioning as a certificate authority and an apparatus A 102 and an apparatus B 103 capable of accessing the server 101, and the server 101, the apparatus A 102, and the apparatus B 103 are all connected to a network 104. The network 104 may be a wired and/or wireless network, such as a LAN and the Internet.

FIG. 1 illustrates two information processing apparatuses (the apparatus A 102 and the apparatus B 103) as apparatuses capable of accessing the server 101 via the network 104. However, the number of information processing apparatuses capable of accessing the server 101 via the network 104 is not limited to two.

Further, FIG. 1 illustrates a network configuration in which direct data communication is performed via the network 104 as a network configuration between the apparatuses; however, the network configuration between the apparatuses is not limited to the configuration illustrated FIG. 1. For example, a configuration may be taken so as to provide one or more relay apparatuses between the apparatuses and perform data communication between the apparatuses via the one or more relay apparatuses.

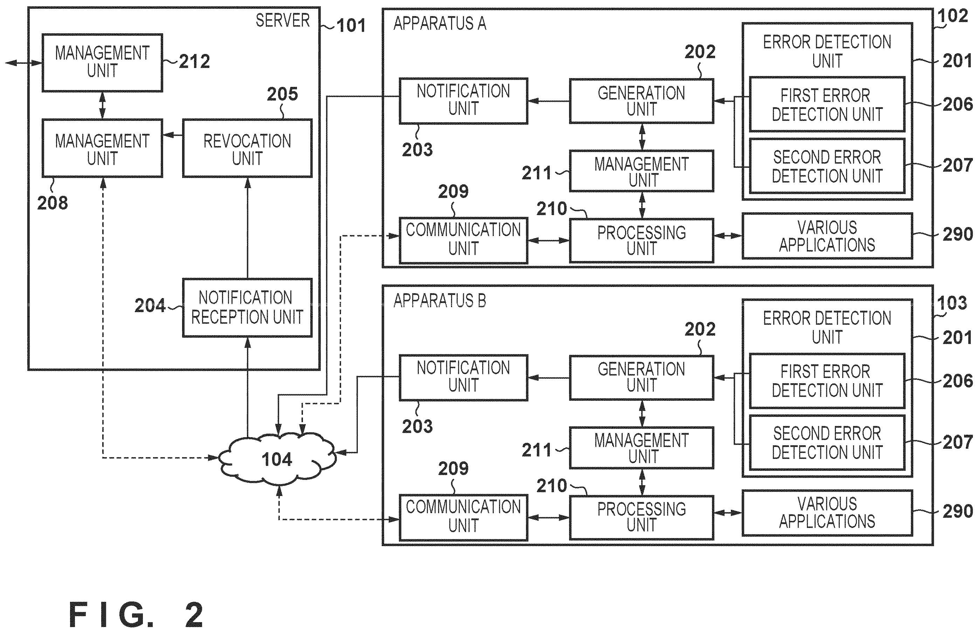

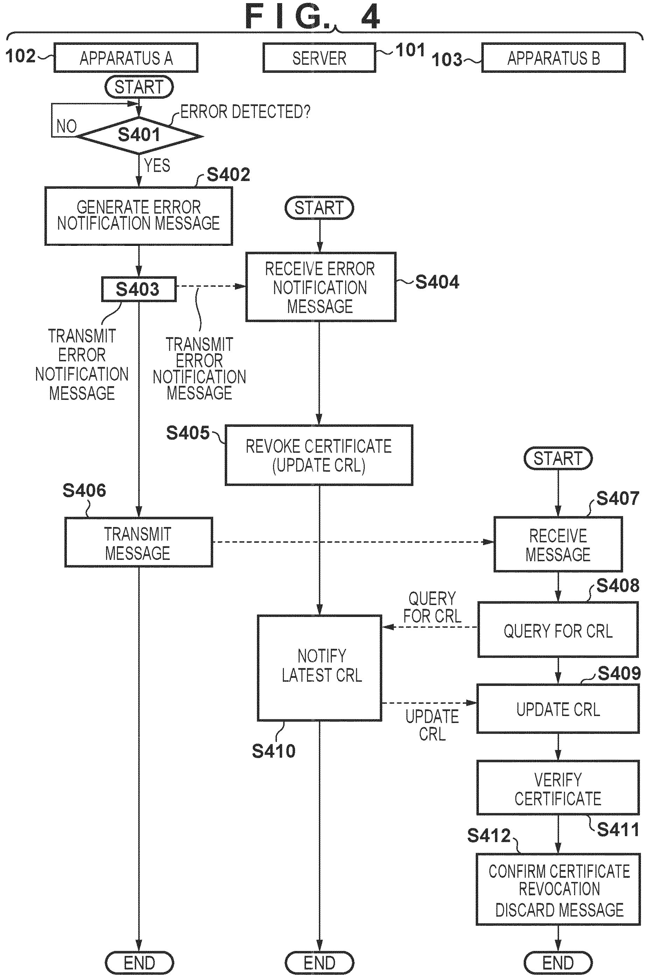

Next, a block diagram of FIG. 2 illustrates an example of functional configurations of the server 101, the apparatus A 102, and the apparatus B 103. In the present embodiment, for the sake of descriptive simplicity, it is assumed that the apparatus A 102 and the apparatus B 103 have the same functional configuration as illustrated in FIG. 2; however, the apparatuses may each have different functional configurations. An operation of such a system will be described according to a flowchart of FIG. 4.

An error detection unit 201 of the apparatus A 102 periodically or irregularly monitors whether an error has occurred in the apparatus A 102. The error detection unit 201 includes a first error detection unit 206 and a second error detection unit 207.

The first error detection unit 206 detects that an "error in terms of security" (hereinafter, simply referred to as an "error") has occurred in the apparatus A 102. For example, when an attack from the outside against the apparatus A 102 is detected or when it is detected that a message received from the outside is suspected to have been tampered with or the like, the first error detection unit 206 determines that an error has occurred. For example, the first error detection unit 206 detects an error (in terms of security) in a message received from the outside or data to be stored in the apparatus A 102. For example, the first error detection unit 206 detects message tampering detected by a message authentication code (MAC), which is an authentication code, or malware intrusion detected by an anti-malware function in which machine learning is used, as an error (in terms of security).

The second error detection unit 207 monitors an operation of each function of the apparatus A 102 and detects an "error in terms of safety" (hereinafter, simply referred to as an "error"). For example, the second error detection unit 207 is provided with a mechanism for comparing output voltages by making a power source circuit of the apparatus A 102 redundant, and detects an unexpected power loss as an error (in terms of safety).

Therefore, when the first error detection unit 206 or the second error detection unit 207 detects an error, the processing proceeds to step S402 via step S401. Meanwhile, when neither the first error detection unit 206 nor the second error detection unit 207 detects an error, the processing waits in step S401.

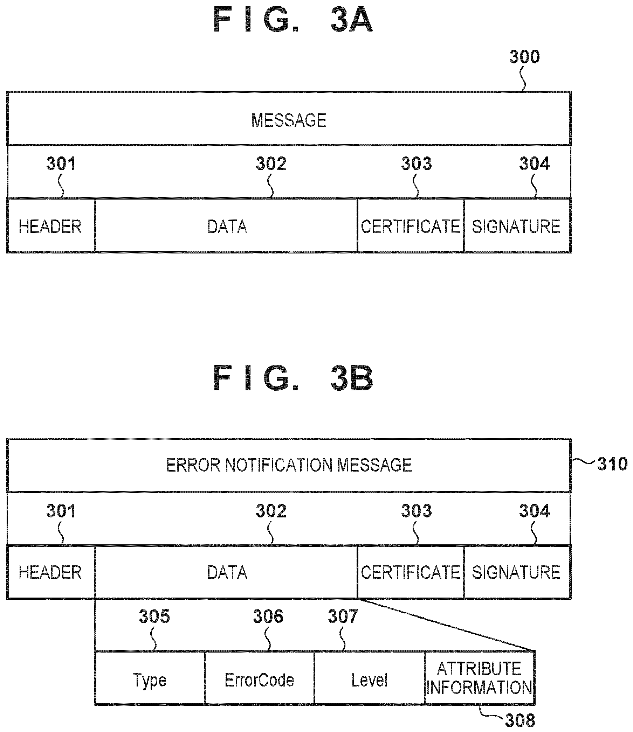

In step S402, a generation unit 202 of the apparatus A 102 generates an error notification message as a notification indicating that an error has occurred. Although the apparatus A 102 is capable of generating various types of messages, in the present embodiment, the messages will be described as having a format illustrated in FIG. 3A.

A region 301 is a region for storing a header, a region 302 is a region for storing data indicating content to be notified, a region 303 is a region for storing a set of a certificate and a corresponding serial number, and a region 304 is a region for storing signature data of the certificate.

The generation unit 202 of the apparatus A 102 generates an error notification message 310 illustrated in FIG. 3B according to such a format illustrated in FIG. 3A. The generation unit 202 of the apparatus A 102 stores a header including information for identifying a transmission source (in the present embodiment, the apparatus A 102) of the error notification message 310, information for identifying a transmission destination (in the present embodiment, the server 101) necessary in terms of protocol in order to connect and communicate with the network 104, and the like in the region 301 of the error notification message 310.

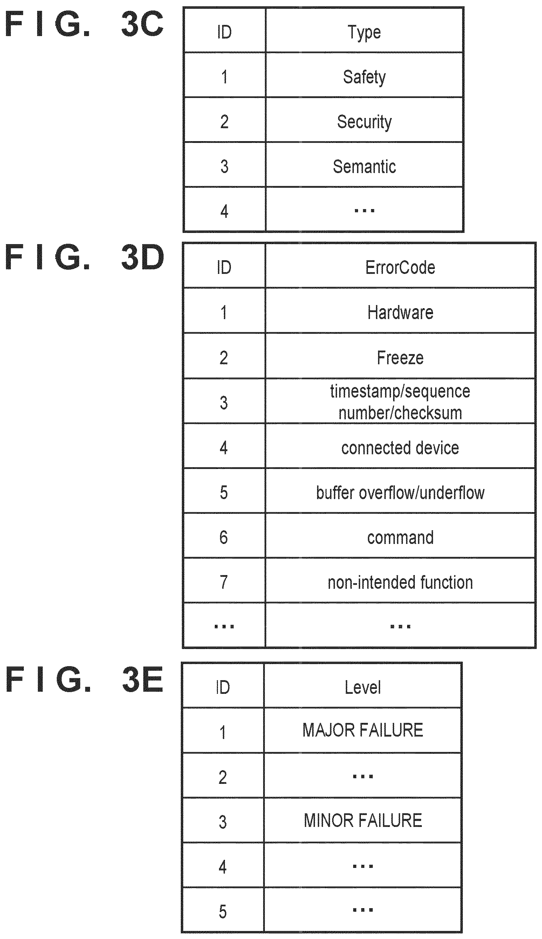

The generation unit 202 of the apparatus A 102 stores an ID corresponding to a type of the error (Type) detected by the error detection unit 201 in a region 305 of the region 302 of the error notification message 310. FIG. 3C illustrates an example of IDs corresponding to various types of errors. For example, when the second error detection unit 207 detects an error, the generation unit 202 stores ID = 1 corresponding to a type "Safety" in the region 305. In addition, when the first error detection unit 206 detects an error, the generation unit 202 stores ID = 2 corresponding to a type "Security" in the region 305. Assume that the table of FIG. 3C is stored in a memory apparatus that can be accessed by the apparatus A 102. In addition, a configuration may be such that when the number of types of errors to be detected increases, the types of errors and corresponding IDs are additionally registered in the table.

The generation unit 202 of the apparatus A 102 stores an ID corresponding to a code (ErrorCode) indicating content of the error (a category related to a cause of the error) detected by the error detection unit 201 in the region 306 of the region 302 of the error notification message 310. The error content includes, for example, an error detected by the second error detection unit 207, such as hardware failure or hardware not responding, and an error detected by the first error detection unit 206, such as message tampering or an attack. FIG. 3D illustrates an example of IDs corresponding to codes indicating various kinds of error content. Assume that the table of FIG. 3D is stored in a memory apparatus that can be accessed by the apparatus A 102. In addition, a configuration may be such that when the number of types of errors to be detected increases, codes indicating content of the errors and corresponding IDs are additionally registered in the table.

The generation unit 202 of the apparatus A 102 stores an ID corresponding to a level (Level) indicating a level of severity of the error detected by the error detection unit 201 in a region 307 of the region 302 of the error notification message 310. For example, when the error detection unit 201 detects a serious error that causes an error in the operation, the generation unit 202 stores ID = 1 corresponding to a level "major failure" in the region 307. For example, when the error detection unit 201 detects an error that does not affect the operation, the generation unit 202 stores ID = 3 corresponding to a level "minor failure" in the region 307. FIG. 3E illustrates an example of IDs corresponding to various levels of errors. Assume that the table of FIG. 3E is stored in a memory apparatus that can be accessed by the apparatus A 102. In addition, a configuration may be such that when the number of types of errors to be detected increases, levels of the errors and corresponding IDs are additionally registered in the table.

The generation unit 202 of the apparatus A 102 stores more detailed information related to an error that cannot be expressed only with the information stored in the regions 305 to 307 in a region 308 of the region 302 of the error notification message 310.

The generation unit 202 of the apparatus A 102 stores a "certificate and serial number of the apparatus A 102" obtained by the apparatus A 102 from a certification authority (in the present embodiment, the server 101) and managed by a management unit 211 in the region 303 of the error notification message 310. A certificate is information indicating authenticity that a transmission source is legitimate.

The generation unit 202 of the apparatus A 102 stores signature data for certifying that the error notification message 310 has not been tampered with in the region 304 of the error notification message 310. For example, the generation unit 202 of the apparatus A 102 generates signature data signed using the "certificate of the apparatus A 102" managed by the management unit 211 for a hash value calculated for the entire error notification message 310 and stores the signature data in the region 304.

In step S403, a notification unit 203 of the apparatus A 102 transmits to the server 101 (notifies the server 101 of) the error notification message generated by the generation unit 202 in step S402 via the network 104. The error notification message may be transmitted to the server 101 or may be transmitted to a plurality of servers including the server 101 using a mechanism, such as multicasting and broadcasting, and the method is not limited.

In step S404, a notification reception unit 204 receives the error notification message transmitted from the apparatus A 102. In step S405, a revocation unit 205 revokes the certificate of the apparatus A 102 using the error notification message received by the notification reception unit 204. A management unit 208 manages a certificate revocation list (CRL) in which a serial number of a revoked certificate and a date and time of the revocation (revocation date) are registered. The revocation unit 205 revokes the certificate of the apparatus A 102 by registering a serial number of the certificate included in the error notification message received by the notification reception unit 204 and the current date and time in the CRL managed by the management unit 208 and updating the CRL. The management unit 208 also manages revoked certificates and responds to queries related to revocation.

A management unit 212 in the server 101, for example, issues certificates and serial numbers, manages issued certificates and serial numbers, and verifies certificates. For example, when a certificate issuance request is received from an external apparatus, such as the apparatus A 102 or the apparatus B 103, the management unit 212 issues a certificate of the external apparatus and transmits the issued certificate and a serial number of the certificate to the external apparatus. This makes it possible for the external apparatus to hold its own certificate and serial number. The management unit 212 is not limited to being included in the server 101 and may be included in an external apparatus that can be accessed by the server 101.

Here, assume that after the certificate of the apparatus A 102 has been revoked, a processing unit 210 generates a message having the format of FIG. 3A by the user performing an operation for transmitting a message to the apparatus B 103 using various applications 290 of the apparatus A 102. That is, the processing unit 210 stores a header of the message in the region 301 of the message, stores content of the message in the region 302, and stores the "certificate and serial number of the apparatus A 102" managed by the management unit 211 in the region 303. The processing unit 210 generates signature data of the message as described above and stores the generated signature data in the region 304.

At this time, in step S406, a communication unit 209 of the apparatus A 102 transmits the message generated by the processing unit 210 to the apparatus B 103 via the network 104, and in step S407, a communication unit 209 of the apparatus B 103 receives the message.

In step S408, the communication unit 209 of the apparatus B 103 queries the server 101 for a CRL, and in step S410, in response to the query, the management unit 208 transmits to the apparatus B 103 (notifies the apparatus B 103 of) the most recent CRL that is being managed.

In step S409, the communication unit 209 of the apparatus B 103 receives the latest CRL transmitted from the server 101 (the management unit 208), and a processing unit 210 of the apparatus B 103 updates the CRL managed by a management unit 211 to the received latest CRL.

In step S411, the processing unit 210 of the apparatus B 103 determines whether the serial number of the certificate of the apparatus A 102 stored in the region 303 of the message received in step S407 is registered in the latest CRL managed by the management unit 211. This determination verifies whether the certificate of the apparatus A 102 has been revoked.

When a result of this determination indicates that the serial number of the certificate of the apparatus A 102 is registered in the latest CRL managed by the management unit 211, it is deemed that the certificate of the apparatus A 102 has been revoked. Meanwhile, when the serial number of the certificate of the apparatus A 102 is not registered in the latest CRL managed by the management unit 211, it is deemed that the certificate of the apparatus A 102 has not been revoked.

Here, the serial number of the certificate of the apparatus A 102 is registered in the latest CRL managed by the management unit 211, and so, in step S412, the processing unit 210 of the apparatus B 103 discards the message received in step S407. In step S412, it is not necessary that the message be discarded so long as processing according to the message received in step S407 is not performed. If the serial number of the certificate of the apparatus A 102 is registered in the latest CRL managed by the management unit 211, the processing unit 210 of the apparatus B 103 executes the processing according to the message received in step S407.

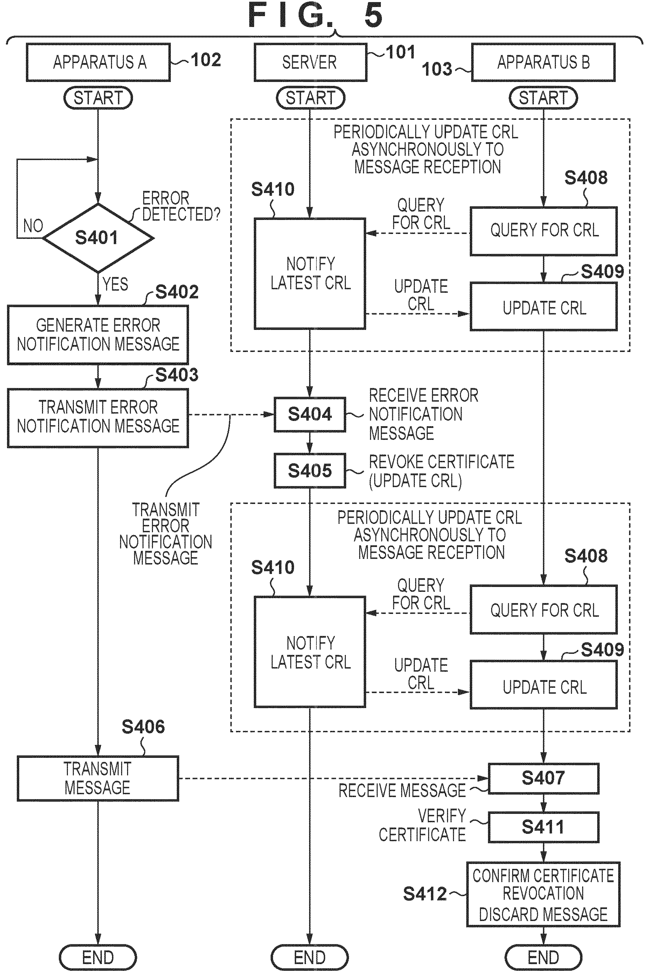

In the processing according to the flowchart of FIG. 4, the apparatus B 103 updates the CRL that it manages in response to receiving a message from the apparatus A 102. However, the timing at which the apparatus B 103 updates the CRL is not limited to a particular timing, and for example, as illustrated in FIG. 5, the apparatus B 103 may periodically update the CRL it manages, regardless of reception of a message from the apparatus A 102. That is, the processing of step S408 to step S410 may be performed periodically. Further, a configuration may be such that the server 101 transmits to each apparatus (notifies each apparatus of) the updated CRL via the network 104, each time the server 101 updates the CRL.

In the present embodiment, the apparatus B 103 queries the server 101 for a CRL and determines whether the certificate of the apparatus A 102 has been revoked by using the CRL obtained from the server 101 in response to the query. However, this mechanism is an example of a mechanism by which the server 101 can invalidate the certificate of the apparatus A 102 and the apparatus B 103 can detect the revocation of the certificate, and the mechanism is not limited to this. For example, the server 101 may use another method, such as Online Certificate Status Protocol (OCSP), to transmit to each apparatus that the certificate of the apparatus A 102 has been revoked.

Further, in the present embodiment, a message transmitted from the apparatus A 102 or the apparatus B 103 is transmitted to the server 101 via the same network 104 regardless of whether the message is an error notification message or another message. However, an error notification message transmitted from the apparatus A 102 or the apparatus B 103 may be transmitted to the server 101 via a network different from that for other types of messages (a dedicated network that is a notification route for error notification).

Further, the types of errors to be detected are not limited to errors in terms of security and errors in terms of safety and can include various errors. Further, there are various errors, such as errors occurring in the apparatus and errors affecting the apparatus from the outside, and errors are not particularly limited so long as the errors can be detected by the apparatus.

Further, in the present embodiment, a case where the certificate of the apparatus A 102 is revoked in response to the apparatus A 102 detecting an error, and the apparatus B 103 discards a message from the apparatus A 102 in response to detecting that the certificate of the apparatus A 102 has been revoked has been described. However, the present embodiment is also applicable to a case where a certificate of the apparatus B 103 is revoked in response to the apparatus B 103 detecting an error, and the apparatus A 102 discards a message from the apparatus B 103 in response to detecting that the certificate of the apparatus B 103 has been revoked. Further, in either case, there may be a plurality of apparatuses functioning as the apparatus A 102 and the apparatus B 103.

As described above, by virtue of the present embodiment, a certificate of an apparatus in which an error has occurred can be revoked at an appropriate timing. Further, an error notification message is only transmitted to a server and thereby can be notified to a necessary apparatus (in the present embodiment, the apparatus B 103) while reducing the amount of communication. In addition, it is possible to confirm from a remote location whether an apparatus is experiencing an error.

### [Second Embodiment]

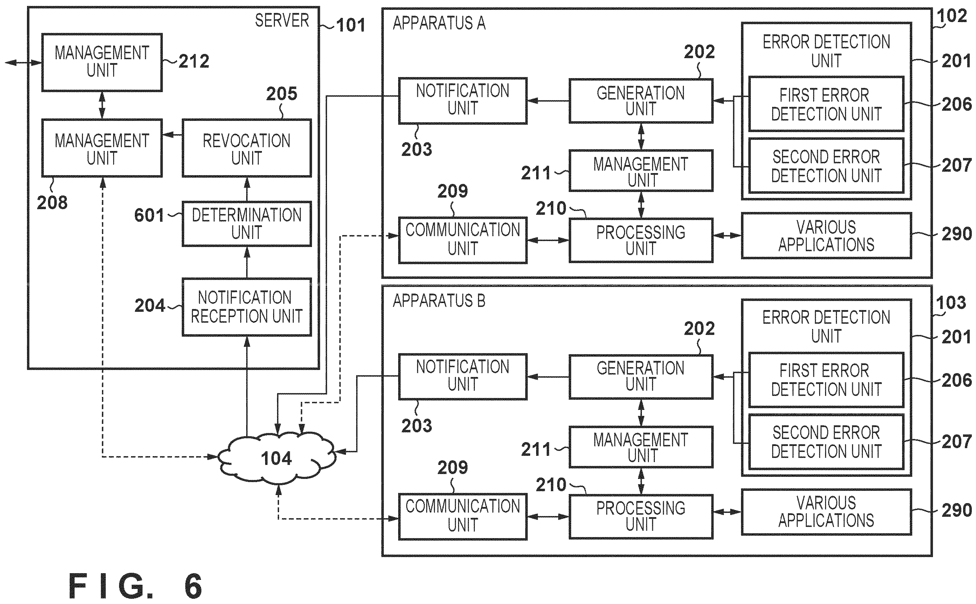

In the following embodiments including the present embodiment, differences from the first embodiment will be described, and unless otherwise mentioned below, assume that they are similar to the first embodiment. An example of a functional configuration of a system according to the present embodiment is illustrated in a block diagram of FIG. 6. The configuration illustrated in FIG. 6 is a configuration to which a determination unit 601 has been added to the server 101 in the configuration illustrated in FIG. 2.

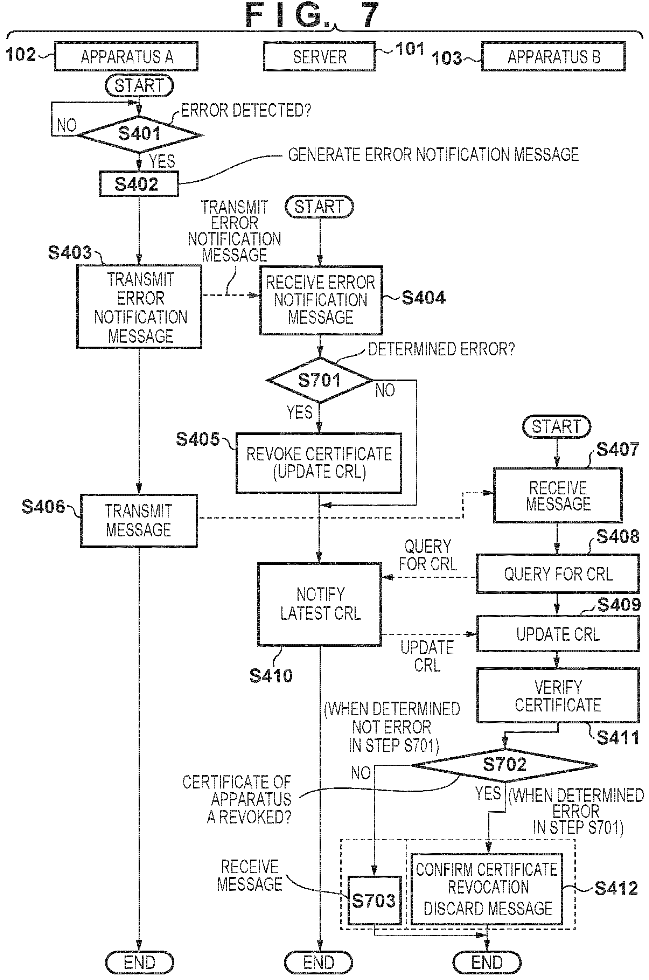

An operation of the system according to the present embodiment will be described according to a flowchart of FIG. 7. The flowchart illustrated in FIG. 7 has a configuration in which step S701 to step S703 have been added to the flowchart illustrated in FIG. 4.

In step S701, the determination unit 601 analyzes the error notification message received in step S404 and determines the necessity of revoking a certificate based on a management criterion of the server 101. Here, an example of determination by the determination unit 601 will be described. For example, assume that a criterion is determined such that safety errors that cause traffic accidents are important but security errors are not something that immediately causes traffic accidents. In this case, when ID = 1 (Type = Safety) is stored in the region 305 of the error notification message and ID = 1 (Level = major failure) is stored in the region 307 of the error notification message, the determination unit 601 determines to revoke a certificate of an apparatus from which the error notification message has been transmitted.

The determination unit 601 may determine whether to revoke the certificate of the apparatus from which the error notification message has been transmitted, according to a value of the ID stored in the region 306 of the error notification message.

Further, the determination unit 601 may comprehensively determine whether to revoke the certificate of the apparatus from which the error notification message has been transmitted, based not only on information stored in the error notification message but also on information obtained before and after the occurrence of the error.

When, as a result of such a determination, it is determined to revoke the certificate of the apparatus A 102 from which the error notification message received in step S404 has been transmitted (that is, it is determined an error), the processing proceeds to step S405. Meanwhile, when it is not determined to revoke the certificate of the apparatus A 102 from which the error notification message received in step S404 has been transmitted (that is, it is not determined an error), the processing proceeds to step S410.

When a result of the determination in step S411 indicates that the serial number of the certificate of the apparatus A 102 is registered in the latest CRL managed by the management unit 211, it is determined that the certificate of the apparatus A 102 has been revoked, and the processing proceeds to step S412 via step S702.

Meanwhile, when a result of the determination in step S411 indicates that the serial number of the certificate of the apparatus A 102 is not registered in the latest CRL managed by the management unit 211, it is determined that the certificate of the apparatus A 102 has not been revoked. In this case, the processing proceeds to step S703 via step S702. In step S703, the processing unit 210 of the apparatus B 103 executes processing according to the message received in step S407.

As described above, by virtue of the present embodiment, it is possible to implement determination of revocation of a certificate at the time of an error on the server 101 side, and thereby implement more flexible management. What the system deems as an error and whether to isolate an apparatus are generally decided on the administrator side. It becomes possible to perform determination based on a unified criterion by performing determination using the determination unit 601 on the server 101 side. Further, the apparatus A 102 only needs to transmit an error notification message including information about an error, and so, it is possible to adapt to each system without modification, such as a program update of the apparatus A 102.

### [Third Embodiment]

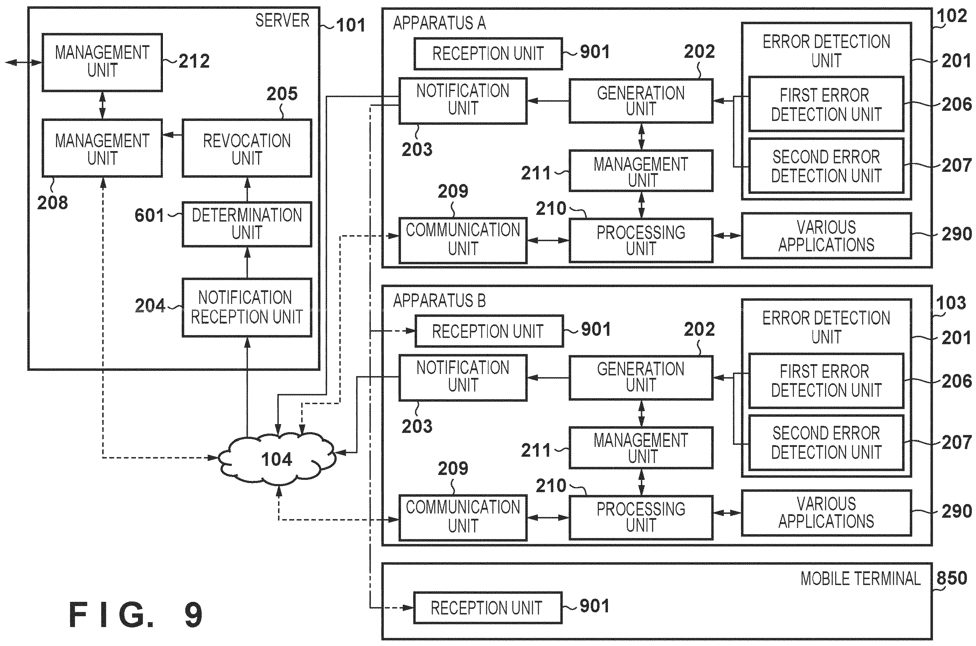

An example of a functional configuration of a system according to the present embodiment will be described with reference to a block diagram of FIG. 9. As illustrated in FIG. 9, the system according to the present embodiment has a configuration in which a mobile terminal 850 has been added to the configuration of the system according to the second embodiment (FIG. 6), and further, the apparatus A 102, the apparatus B 103, and the mobile terminal 850 all include a reception unit 901.

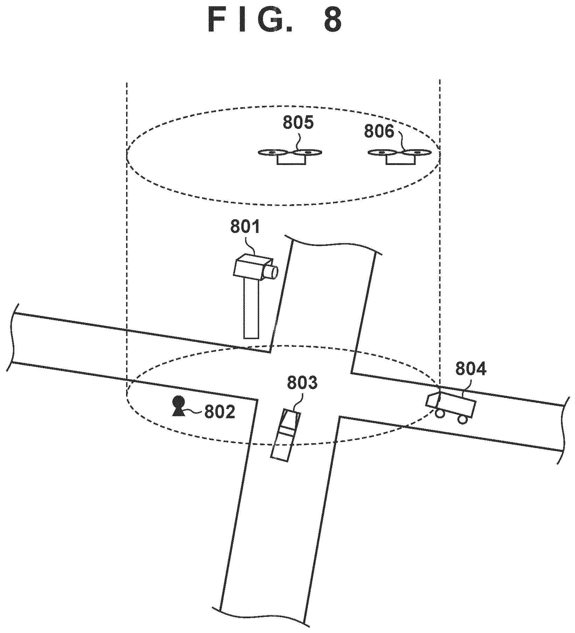

An example of application of the system according to the present embodiment is illustrated in FIG. 8. As illustrated in FIG. 8, a roadside unit 801, which is an image capturing apparatus, is provided on a shoulder of a road; a pedestrian 802 holding the mobile terminal 850 is walking on a road surface; and a vehicle 803 and a vehicle 804 are traveling. In addition, a drone 805 and a drone 806 are flying in the sky. In such a case, either the apparatus A 102 or the apparatus B 103 can be applied to the roadside unit 801, the vehicle 803, the vehicle 804, the drone 805, the drone 806, and the mobile terminal 850.

The vehicle 803 and the vehicle 804 are examples of moving bodies and other types of moving bodies are possible. The drone 805 and the drone 806 are examples of moving bodies that fly and other types of moving bodies are possible. The mobile terminal 850 only illustrates an example of a portable terminal (i.e., a mobile body) that does not include the notification unit 203 and does include the reception unit 901, and may be another type of a moving body.

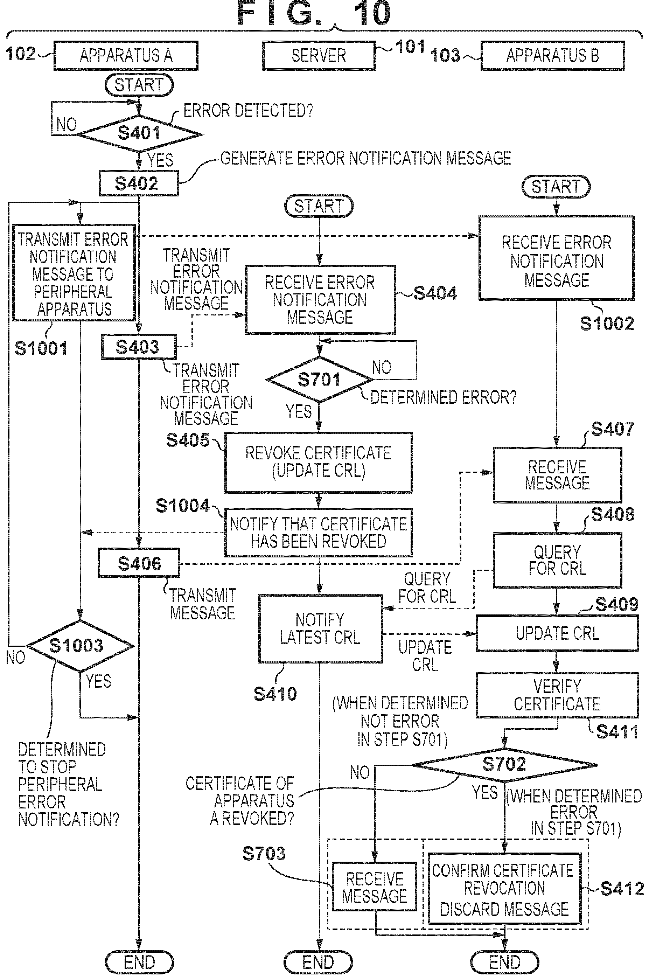

An operation of the system according to the present embodiment will be described according to a flowchart of FIG. 10. The flowchart of FIG. 10 has a configuration in which step S1001 to step S1004 have been added to the flowchart of FIG. 7. The processing of steps S1001 and S1003 is processing performed in parallel with the processing of step S401 to step S403 and step S406.

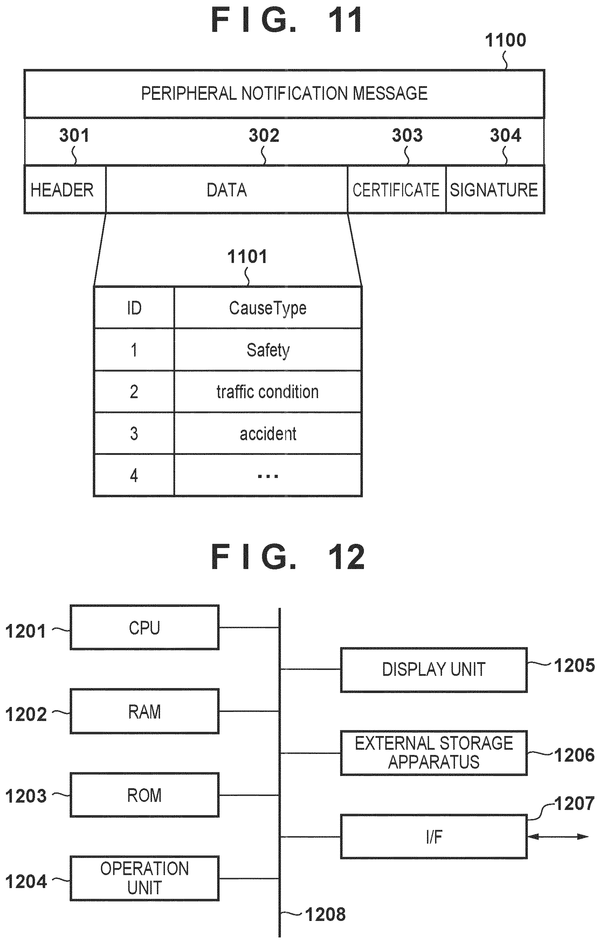

In step S1001, the notification unit 203 of the apparatus A 102 transmits to an apparatus other than the server 101 (in FIG. 10, the apparatus B 103) (notifies the apparatus other than the server 101 of) the error notification message generated by the generation unit 202 in step S402 via the network 104. A functional unit for notifying the server 101 of an error notification message and a functional unit for notifying an apparatus other than the server 101 of an error notification message may be the same functional unit or separate functional units. The format of an error notification message to be transmitted to the server 101 and the format of an error notification message to be transmitted to an apparatus other than the server 101 may be of the same format or formats different from each other. FIG. 11 illustrates an example of a configuration of an error notification message to be transmitted to an apparatus other than the server 101.

The format illustrated in FIG. 11 is the same as the format illustrated in FIG. 3A; however, an ID corresponding to the type (CauseType) of an error detected by the error detection unit 201 is stored as data 1101 in the region 302 of a peripheral notification message 1100, which is an error notification message to be transmitted to an apparatus other than the server 101. Such a peripheral notification message 1100 is generated by the generation unit 202 of the apparatus A 102 in step S402.

The notification of an error notification message in step S1001 may be performed at regular intervals, or a configuration may be taken so as to notify an error notification message often in the beginning and over time gradually increase the intervals at which an error notification message is notified.

In step S1002, the reception unit 901 of the apparatus B 103 receives the error notification message transmitted by the notification unit 203 in step S1001. This makes it possible for the apparatus B 103 to detect that an error has occurred in the apparatus A 102 earlier than in the first embodiment and the second embodiment and take measures against transmissions from the apparatus A 102 earlier than in the first embodiment and the second embodiment. That is, the apparatus B 103 can take measures for preventing accidents without waiting for confirmation according to revocation of the certificate. For example, when the error notification message transmitted by the notification unit 203 of the apparatus A 102 is received in step S1002, the apparatus B 103 can perform a setting for blocking transmissions from the apparatus A 102.

In step S1004, the management unit 208 transmits to the apparatus A 102 (notifies the apparatus A 102 of) a certificate expiration completion notification, which is a notification indicating that the certificate of the apparatus A 102 has been revoked, via the network 104.

In step S1003, the notification unit 203 of the apparatus A 102 determines whether to stop transmission of an error notification message to an apparatus other than the server 101. When a certificate revocation completion notification is received from the management unit 208, the notification unit 203 of the apparatus A 102 determines to stop transmission of an error notification message to an apparatus other than the server 101. Meanwhile, when a certificate revocation completion notification is not received from the management unit 208, the notification unit 203 of the apparatus A 102 determines not to stop transmission (continue transmission) of an error notification message to an apparatus other than the server 101.

When, as a result of such determination, it is determined to stop transmission of an error notification message to an apparatus other than the server 101, the processing of steps S1001 and S1003 ends. Meanwhile, when it is determined to not stop transmission (continue transmission) of an error notification message to an apparatus other than the server 101, the processing proceeds to step S1001.

A criterion to be referenced for determining whether to stop transmission of an error notification message to an apparatus other than the server 101 is not limited to a particular criterion, and the transmission of an error notification message to an apparatus other than the server 101 is stopped in response to an error in the apparatus A 102 being resolved.

Further, in the present embodiment, even when the apparatus B 103 receives a message at a location away from the apparatus A 102 due to time elapsing or the apparatus B 103 moving, it is possible to know whether the apparatus A 102 is in an error state based on a CRL issued by the server 101.

Further, in the flowchart of FIG. 10, a case in which an error notification message is transmitted to the apparatus B 103 in step S1001 has been described; however, an error notification message may be transmitted to the mobile terminal 850 in addition to or in place of the apparatus B 103.

As described above, by virtue of the present embodiment, an error that has occurred in a moving body/apparatus is notified to a peripheral moving body/peripheral apparatus in a vicinity of the moving body/apparatus, and so, it is possible to take measures against transmissions from the moving body/apparatus earlier than in the first embodiment or the second embodiment.

### [Fourth Embodiment]

Each of the functional units illustrated in FIGS. 2, 6, and 9 may be implemented in hardware or software (a computer program). In the latter case, a computer apparatus capable of executing the computer program is applicable to the server 101, the apparatus A 102, or the apparatus B 103. An example of a hardware configuration of the computer apparatus applicable to the server 101, the apparatus A 102, or the apparatus B 103 will be described with reference to a block diagram of FIG. 12.

A CPU 1201 performs various kinds of processing using computer programs and data stored in a RAM 1202 and a ROM 1203. The CPU 1201 thus controls the operation of the entire computer apparatus as well as executes or controls each of the processes described above to be performed by the server 101, the apparatus A 102, or the apparatus B 103 to which the computer apparatus is applied.

The RAM 1202 includes an area for storing computer programs and data loaded from the ROM 1203 or an external storage apparatus 1206 and an area for storing data received externally via an I/F 1207. In addition, the RAM 1202 has a working area that the CPU 1201 uses when performing various kinds of processing. The RAM 1202 can thus provide various areas as appropriate.

The ROM 1203 stores setting data of the computer apparatus, a computer program and data related to activation of the computer apparatus, a computer program and data related to a basic operation of the computer apparatus, and the like.

An operation unit 1204 is a user interface, such as a keyboard, a mouse, and a touch panel and can input various instructions to the CPU 1201 by being operated by the user. For example, the user can operate the above-described various applications 290 using the operation unit 1204.

A display unit 1205 is a display apparatus including a liquid crystal screen and a touch panel screen and can display a result of processing by the CPU 1201 with images, characters, and the like. The display unit 1205 may be a projection apparatus, such as a projector for projecting images and characters.

The external storage apparatus 1206 is a large capacity information storage apparatus, such as a hard disk drive apparatus. The external storage apparatus 1206 stores an OS; a computer program and data for causing the server 101, the apparatus A 102, or the apparatus B 103 to execute or control the various kinds of processing described above to be performed by the CPU 1201; and the like. The data stored in the external storage apparatus 1206 also includes data (a certificate, a serial number, a CRL, and the like) described as being managed by each of the server 101, the apparatus A 102, and the apparatus B 103.

The computer programs and data stored in the external storage apparatus 1206 are loaded into the RAM 1202 as appropriate according to control by the CPU 1201 and are to be processed by the CPU 1201.

The I/F 1207 is a communication interface for performing data communication with an external apparatus via the network 104. When a plurality of networks are provided according to communication purposes, the I/F 1207 may include an I/F for connecting to each of the networks.

The CPU 1201, the RAM 1202, the ROM 1203, the operation unit 1204, the display unit 1205, the external storage apparatus 1206, and the I/F 1207 are all connected to a system bus 1208. A computer apparatus having the hardware configuration exemplified in FIG. 12 may be applied to each of the server 101, the apparatus A 102, and the apparatus B 103 or a computer apparatus having a different hardware configuration may be applied to each of the server 101, the apparatus A 102, and the apparatus B 103.

The numerical values; processing timings; processing order; processing entities; data (information) configurations, obtainment methods, transmission destinations, transmission sources, and storage locations; and the like used in each of the above-described embodiments are mentioned as examples for the sake of providing a concrete explanation, and there is no intention to limit the present disclosure to such examples.

Further, a part or all of the above-described embodiments may be used in combination as appropriate. Further, a part or all of the above-described embodiments may be selectively used.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to exemplary embodiments, it is to be understood that the present disclosure is not limited to the disclosed exemplary embodiments. The scope of the following claims is to be accorded the broadest interpretation so as to encompass all such modifications and equivalent structures and functions.

## Claims

1. A system including a first apparatus (102), a second apparatus (101), and a third apparatus (103),
the first apparatus comprising:
detection means (201) for detecting that an error has occurred in the first apparatus; and
transmission means (202,203) for transmitting, to the second apparatus and the third apparatus, an error notification message which indicates that the error has occurred in the first apparatus,
the second apparatus comprising:
reception means (204) for receiving the error notification message transmitted by the transmission means;
determination means (601) for determining a necessity for revocation of a certificate of the first apparatus based on the error notification message received by the reception means;
revocation means (205) for revoking, when the determination means determines to revoke the certificate of the first apparatus, the certificate of the first apparatus by registering a serial number of the certificate of the first apparatus included in the error notification message received by the reception means and a current date and time in a certificate revocation list, CRL, to update the CRL, and
the third apparatus comprising:
means (210) for discarding, when the serial number of the certificate of the first apparatus included in the error notification message which is transmitted from the first apparatus in accordance with a user operation is registered in the CRL received from the second apparatus, the error notification message which is transmitted from the first apparatus in accordance with the user operation.

2. The system according to claim 1, **characterized in that** the detection means detects an error in terms of security and an error in terms of safety.

3. The system according to claim 1, **characterized in that** the determination means determines the necessity of revocation of the certificate of the first apparatus based on a type of the error and a level indicating a level of severity of the error included in the error notification message received by the reception means.

4. The system according to claim 1, **characterized in that**
the second apparatus transmits to the third apparatus that the certificate of the first apparatus has been revoked.

5. The system according to claim 1, **characterized in that**
when the revocation of the certificate of the first apparatus is notified from the second apparatus, the transmission means stops transmitting to the third apparatus the error notification message.

6. The system according to claim 1, **characterized in that** the first apparatus and the third apparatus are each either a vehicle or a roadside device.

7. An information processing method to be performed by a system including a first apparatus (102), a second apparatus (101), and a third apparatus (103), the method comprising:
detecting, by the first apparatus, that an error has occurred in the first apparatus;
transmitting, by the first apparatus to the second apparatus and the third apparatus, an error notification message which indicates that the error has occurred in the first apparatus;
receiving, by the second apparatus, the error notification message transmitted by the first apparatus;
determining, by the second apparatus, a necessity for revocation of a certificate of the first apparatus based on the error notification message received by the second apparatus;
revoking, by the second apparatus, when the second apparatus determines to revoke the certificate of the first apparatus, the certificate of the first apparatus by registering a serial number of the certificate of the first apparatus included in the error notification message received by the second apparatus and a current date and time in a certificate revocation list, CRL, to update the CRL;
discarding, by the third apparatus, when the serial number of the certificate of the first apparatus included in the error notification message which is transmitted from the first apparatus in accordance with a user operation is registered in the CRL received from the second apparatus, the error notification message which is transmitted from the first apparatus in accordance with the user operation.

8. A computer program that causes a system of computers to function as the system according to any one of claims 1 to 6.

## Patentansprüche

1. System mit einer ersten Vorrichtung (102), einer zweiten Vorrichtung (101) und einer dritten Vorrichtung (103),
wobei die erste Vorrichtung umfasst:
eine Detektionseinrichtung (201) zum Detektieren, dass ein Fehler in der ersten Vorrichtung aufgetreten ist; und
eine Übertragungseinrichtung (202, 203) zum Übertragen einer Fehlerbenachrichtigungsmitteilung, die angibt, dass der Fehler in der ersten Vorrichtung aufgetreten ist, an die zweite Vorrichtung und die dritte Vorrichtung,
wobei die zweite Vorrichtung umfasst:
eine Empfangseinrichtung (204) zum Empfangen der durch die Übertragungseinrichtung übertragenen Fehlerbenachrichtigungsmitteilung;
eine Bestimmungseinrichtung (601) zum Bestimmen einer Notwendigkeit des Widerrufens eines Zertifikats der ersten Vorrichtung basierend auf der durch die Empfangseinrichtung empfangenen Fehlerbenachrichtigungsmitteilung;
eine Widerrufseinrichtung (205) zum Widerrufen, wenn die Bestimmungseinrichtung bestimmt, das Zertifikat der ersten Vorrichtung zu widerrufen, des Zertifikats der ersten Vorrichtung durch Registrieren einer Seriennummer des Zertifikats der ersten Vorrichtung, welche in der durch die Empfangseinrichtung empfangenen Fehlerbenachrichtigungsmitteilung enthalten ist, sowie eines aktuellen Datums und einer aktuellen Uhrzeit in einer Zertifikatswiderrufsliste, CRL, um die CRL zu aktualisieren, und
wobei die dritte Vorrichtung umfasst:
eine Einrichtung (210) zum Verwerfen der Fehlerbenachrichtigungsmitteilung, welche von der ersten Vorrichtung gemäß einer Benutzerbedienung übertragen wird, wenn die Seriennummer des Zertifikats der ersten Vorrichtung, welche in der Fehlerbenachrichtigungsmitteilung enthalten ist, welche von der ersten Vorrichtung gemäß der Benutzerbedienung übertragen wird, in der von der zweiten Vorrichtung empfangenen CRL registriert ist.

2. System nach Anspruch 1, **dadurch gekennzeichnet, dass** die Detektionseinrichtung einen Fehler hinsichtlich der Zugriffssicherheit und einen Fehler hinsichtlich der Betriebssicherheit detektiert.

3. System nach Anspruch 1, **dadurch gekennzeichnet, dass** die Bestimmungseinrichtung die Notwendigkeit des Widerrufens des Zertifikats der ersten Vorrichtung basierend auf einem Typ des Fehlers und einem Grad, der einen Schweregrad des Fehlers angibt, welcher in der durch die Empfangseinrichtung empfangenen Fehlerbenachrichtigungsmitteilung enthalten ist, bestimmt.

4. System nach Anspruch 1, **dadurch gekennzeichnet, dass**
die zweite Vorrichtung an die dritte Vorrichtung überträgt, dass das Zertifikat der ersten Vorrichtung widerrufen wurde.

5. System nach Anspruch 1, **dadurch gekennzeichnet, dass**
wenn der Widerruf des Zertifikats der ersten Vorrichtung von der zweiten Vorrichtung benachrichtigt wird, die Übertragungseinrichtung das Übertragen der Fehlerbenachrichtigungsmitteilung an die dritte Vorrichtung stoppt.

6. System nach Anspruch 1, **dadurch gekennzeichnet, dass** die erste Vorrichtung und die dritte Vorrichtung jeweils entweder ein Fahrzeug oder eine zur Straße gehörige Vorrichtung sind.

7. Informationsverarbeitungsverfahren, das von einem System mit einer ersten Vorrichtung (102), einer zweiten Vorrichtung (101) und einer dritten Vorrichtung (103) auszuführen ist, wobei das Verfahren umfasst:
Detektieren durch die erste Vorrichtung, dass ein Fehler in der ersten Vorrichtung aufgetreten ist;
Übertragen einer Fehlerbenachrichtigungsmitteilung, die angibt, dass der Fehler in der ersten Vorrichtung aufgetreten ist, durch die erste Vorrichtung an die zweite Vorrichtung und die dritte Vorrichtung;
Empfangen der durch die erste Vorrichtung übertragenen Fehlerbenachrichtigungsmitteilung durch die zweite Vorrichtung;
Bestimmen durch die zweite Vorrichtung einer Notwendigkeit zum Widerrufen eines Zertifikats der ersten Vorrichtung basierend auf der durch die zweite Vorrichtung empfangenen Fehlerbenachrichtigungsmitteilung;
Widerrufen durch die zweite Vorrichtung, wenn die zweite Vorrichtung bestimmt, das Zertifikat der ersten Vorrichtung zu widerrufen, des Zertifikats der ersten Vorrichtung durch Registrieren einer Seriennummer des Zertifikats der ersten Vorrichtung, welche in der durch die zweite Vorrichtung empfangenen Fehlerbenachrichtigungsmitteilung enthalten ist, und eines aktuellen Datums und einer aktuellen Uhrzeit in einer Zertifikatswiderrufsliste, CRL, um die CRL zu aktualisieren;
Verwerfen durch die dritte Vorrichtung von der Fehlerbenachrichtigungsmitteilung, welche von der ersten Vorrichtung gemäß einer Benutzerbedienung übertragen wird, wenn die Seriennummer des Zertifikats der ersten Vorrichtung, welche in der Fehlerbenachrichtigungsmitteilung enthalten ist, welche von der ersten Vorrichtung gemäß der Benutzerbedienung übertragen wird, in der von der zweiten Vorrichtung empfangenen CRL registriert ist.

8. Computerprogramm, welches ein System von Computern veranlasst, als das System nach einem der Ansprüche 1 bis 6 zu funktionieren.

## Revendications

1. Système comprenant un premier appareil (102), un deuxième appareil (101) et un troisième appareil (103), le premier appareil comprenant :
un moyen de détection (201) pour détecter qu'une erreur s'est produite dans le premier appareil ; et
un moyen de transmission (202, 203) pour transmettre, au deuxième appareil et au troisième appareil, un message de notification d'erreur qui indique que l'erreur s'est produite dans le premier appareil,
le deuxième appareil comprenant :
un moyen de réception (204) pour recevoir le message de notification d'erreur transmis par le moyen de transmission ;
un moyen de détermination (601) pour déterminer une nécessité de révocation d'un certificat du premier appareil sur la base du message de notification d'erreur reçu par le moyen de réception ;
un moyen de révocation (205) pour révoquer, lorsque le moyen de détermination détermine qu'il faut révoquer le certificat du premier appareil, le certificat du premier appareil en enregistrant un numéro de série du certificat du premier appareil inclus dans le message de notification d'erreur reçu par le moyen de réception et une date et une heure actuelles dans une liste de révocation de certificat, CRL, pour mettre à jour la CRL, et
le troisième appareil comprenant :
un moyen (210) pour rejeter, lorsque le numéro de série du certificat du premier appareil inclus dans le message de notification d'erreur qui est transmis à partir du premier appareil conformément à une opération utilisateur est enregistré dans la CRL reçue à partir du deuxième appareil, le message de notification d'erreur qui est transmis à partir du premier appareil conformément à l'opération utilisateur.

2. Système selon la revendication 1, **caractérisé en ce que** le moyen de détection détecte une erreur en termes de sécurité et une erreur en termes de sûreté.

3. Système selon la revendication 1, **caractérisé en ce que** le moyen de détermination détermine la nécessité de révocation du certificat du premier appareil sur la base d'un type d'erreur et d'un niveau indiquant un niveau de gravité de l'erreur inclus dans le message de notification d'erreur reçu par le moyen de réception.

4. Système selon la revendication 1, **caractérisé en ce que** le deuxième appareil transmet au troisième appareil que le certificat du premier appareil a été révoqué.

5. Système selon la revendication 1, **caractérisé en ce que** lorsque la révocation du certificat du premier appareil est notifiée à partir du deuxième appareil, le moyen de transmission cesse de transmettre au troisième appareil le message de notification d'erreur.

6. Système selon la revendication 1, **caractérisé en ce que** le premier appareil et le troisième appareil sont chacun soit un véhicule, soit un dispositif routier.

7. Procédé de traitement d'informations à mettre en œuvre par un système comprenant un premier appareil (102), un deuxième appareil (101) et un troisième appareil (103), le procédé comprenant :
la détection, par le premier appareil, qu'une erreur s'est produite dans le premier appareil ;
la transmission, par le premier appareil au deuxième appareil et au troisième appareil, d'un message de notification d'erreur qui indique que l'erreur s'est produite dans le premier appareil ;
la réception, par le deuxième appareil, du message de notification d'erreur transmis par le premier appareil ;
la détermination, par le deuxième appareil, d'une nécessité de révocation d'un certificat du premier appareil sur la base du message de notification d'erreur reçu par le deuxième appareil ;
la révocation, par le deuxième appareil, lorsque le deuxième appareil détermine qu'il faut révoquer le certificat du premier appareil, du certificat du premier appareil en enregistrant un numéro de série du certificat du premier appareil inclus dans le message de notification d'erreur reçu par le deuxième appareil et une date et une heure actuelles dans une liste de révocation de certificat, CRL, pour mettre à jour la CRL ;
le rejet, par le troisième appareil, lorsque le numéro de série du certificat du premier appareil inclus dans le message de notification d'erreur qui est transmis à partir du premier appareil conformément à une opération utilisateur est enregistré dans la CRL reçue à partir du deuxième appareil, du message de notification d'erreur qui est transmis à partir du premier appareil conformément à l'opération utilisateur.

8. Programme informatique qui amène un système d'ordinateurs à fonctionner comme le système selon l'une quelconque des revendications 1 à 6.
